# EUROPÄISCHE PATENTANMELDUNG

(11) **EP 4 848 010 A1**
(43) Veröffentlichungstag der Anmeldung: **02.12.2026**
(21) Anmeldenummer: 25179854.2
(22) Anmeldetag: 30.05.2025
(51) Int. Cl.: G05B 13/04

(54) **VERFAHREN ZUM KONFIGURIEREN EINES REGLERS IN EINEM REGELSYSTEM MIT EINEM GESCHLOSSENEN REGELKREIS**

(71) Anmelder: Robert Bosch GmbH, 70442 Stuttgart (DE)
(72) Erfinder: Berkel, Felix, 67105 Schifferstadt (DE); Achterhold, Jan, 72070 Tuebingen (DE); Mark, Christoph, 67575 Eich (DE)

(57) **Zusammenfassung**

Verschiedene Aspekte betreffen ein Verfahren zum Konfigurieren eines Reglers in einem Regelsystem mit geschlossenem Regelkreis, das Verfahren aufweisend: Ermitteln einer Kostenfunktion des Regelsystems mittels eines Sprachmodells, indem eine Textbeschreibung, welche eine Regelaufgabe des Regelsystems beschreibt und eine Anweisung zum Ermitteln der Kostenfunktion aufweist, in das Sprachmodell eingegeben wird; Ermitteln mehrerer optimierter Regelparameterwerte, indem mittels Optimierung für jeden Regelparameter mehrerer Regelparameter des Reglers ein jeweiliger optimierter Regelparameterwert ermittelt wird, wobei jede Iteration der Bayesschen Optimierung aufweist: Ermitteln mehrerer Regelparameterwerte, indem für jeden Regelparameter der mehreren Regelparameter ein jeweiliger Regelparameterwert ermittelt wird, um die Kostenfunktion zu verringern, Ermitteln eines Reglermodells, indem das Regelsystem unter Verwendung der mehreren Regelparameterwerte mittels Reglersynthese für eine vordefinierte Regelmethode modelliert wird, Simulieren eines zeitlichen Verhaltens des Regelsystems anhand des Reglermodells, und unter Verwendung des zeitlichen Verlaufs des Regelsystems, Ermitteln eines Kostenfunktionswerts gemäß der Kostenfunktion; und Konfigurieren des Reglers gemäß dem Reglermodell und den mehreren optimierten Regelparameterwerten.

## Beschreibung

### Stand der Technik

In zahlreichen Anwendungen werden Regler, wie beispielsweise Proportional-Integral-Differential (PID) Regler und Linear-Quadratische Regler (LQR), zur Regelung technischer (z.B. physikalischer oder chemischer) Prozesse eingesetzt. Üblicherweise wird ein Regler entweder manuell von einem Experten entworfen, indem Regelparameter so ermittelt werden, dass eine Stabilität und Sicherheit des Reglers gewährleistet wird, oder es erfolgt eine algorithmische Optimierung der Regelparameter.

### Offenbarung der Erfindung

Das manuelle Entwerfen eines Reglers (auch als Reglerdesign bezeichnet) ist zeit- und kostenaufwändig. Auch ist es unwahrscheinlich, dass durch manuelle Abstimmung eine optimale Lösung gefunden wird. Die algorithmische Optimierung der Regelparameter verringert zwar diesen Zeit- und Kostenaufwand, erfordert allerdings die Definition einer Kostenfunktion durch den Experten. Die Definition der Kostenfunktion durch den Experten stellt ein erhebliches Hindernis für den effektiven Einsatz der algorithmischen Optimierung dar. Auch sind klassische Optimierungsverfahren auf die Stabilität und ein Ansprechverhalten des Reglers fokussiert und berücksichtigen üblicherweise keine ökonomischen Ziele, welche in modernen Anwendungen von entscheidender Bedeutung sein können. Zum Beispiel kann für eine Regelung im Automobilbereich eine Reduzierung (z.B. Minimierung) des Kraftstoff- oder Stromverbrauchs gewünscht sein.

Die vorliegende Offenbarung bezieht sich auf ein Verfahren zum Konfigurieren eines Reglers in einem Regelsystem mit einem geschlossenen Regelkreis. Das Verfahren ermöglicht sowohl die Berücksichtigung von klassischen Randbedingungen, wie der Stabilität und Sicherheit des Regelsystems, als auch von wirtschaftlichen Zielen. Auch ermöglicht das Verfahren eine Rekonfiguration des Reglers im Betrieb anhand von Benutzer-Rückmeldungen zum Verhalten des Reglers, ohne dass Expertenwissen erforderlich ist. Eine solche Rekonfiguration im Betrieb ist mit klassischen Verfahren des Reglerdesigns aufgrund des fehlenden Experten nicht möglich.

Dies wird beispielsweise dadurch erreicht, dass ein großes Sprachmodell (engl.: Large Language Model, LLM) eingesetzt wird, um die für die algorithmische Optimierung erforderliche Kostenfunktion zu ermitteln. Hierbei kann das Sprachmodell die Kostenfunktion beispielsweise unter Verwendung einer Rückmeldung des Benutzers (in natürlicher Sprache) ermitteln.

Verschiedene Aspekte betreffen ein Verfahren zum Konfigurieren eines Reglers in einem Regelsystem mit einem geschlossenen Regelkreis, das Verfahren aufweisend: Ermitteln einer Kostenfunktion des Regelsystems mittels eines (großen) Sprachmodells, indem eine Textbeschreibung, welche eine Regelaufgabe des Regelsystems beschreibt (z.B. eine Beschreibung des gewünschten Verhaltens und eine Modellbeschreibung des Regelproblems) und eine Anweisung zum Ermitteln der Kostenfunktion aufweist, in das Sprachmodell eingegeben wird; Ermitteln mehrerer optimierter Regelparameterwerte, indem mittels einer (z.B. Bayesschen) Optimierung für jeden Regelparameter mehrerer Regelparameter des Reglers ein jeweiliger optimierter Regelparameterwert ermittelt wird, wobei jede Iteration der (z.B. Bayesschen) Optimierung aufweist: Ermitteln mehrerer Regelparameterwerte, indem für jeden Regelparameter der mehreren Regelparameter ein jeweiliger Regelparameterwert ermittelt wird, um die Kostenfunktion zu verringern (z.B. zu minimieren), Ermitteln eines Reglermodells, indem das Regelsystem unter Verwendung der (ermittelten) mehreren Regelparameterwerte mittels Reglersynthese für eine vordefinierte Regelmethode modelliert wird, Simulieren eines zeitlichen Verhaltens (z.B. einer Trajektorie) des Regelsystems anhand des Reglermodells, und unter Verwendung des (simulierten) zeitlichen Verlaufs des Regelsystems, Ermitteln eines Kostenfunktionswerts gemäß der Kostenfunktion; und Konfigurieren des Reglers gemäß dem (in der letzten Iteration der (z.B. Bayesschen) Optimierung ermittelten) Reglermodell und den mehreren optimierten Regelparameterwerten.

Beispielhafte Optimierungsmethoden zur Optimierung der Regelparameter des Reglers sind ableitungsfreie (engl.: derivative free) Optimierungsmethoden. Anschaulich kann die Optimierung eine ableitungsfreie Optimierung sein. Zur Veranschaulich wird die Optimierung hierin in verschiedenen Aspekten anhand der Bayesschen Optimierung beschrieben. Es wird verstanden, dass dies ein Beispiel ist und dass die Optimierung jede andere Art von Optimierung verwenden kann, wie beispielsweise eine Partikel Schwarm Optimierung oder einen evolutionären Optimierungsalgorithmus (auch als genetischer Optimierungsalgorithmus bezeichnet).

Im Folgenden werden verschiedene Ausführungsbeispiele angegeben.

Beispiel 1 ist das Verfahren zum Konfigurieren eines Reglers in einem Regelsystem mit einem geschlossenen Regelkreis wie voranstehend beschrieben.

Beispiel 2 ist eingerichtet gemäß Beispiel 1, wobei die Textbeschreibung ferner eine Anweisung zum Ermitteln von Randbedingungen, welche für mindestens einen Regelparameter der mehreren Regelparameter einen Bereich zulässiger Regelparameterwerte angeben, aufweist, so dass mittels des Sprachmodells ferner die Randbedingungen ermittelt (z.B. ausgegeben) werden; und wobei die mehreren Regelparameterwerte bei der (z.B. Bayesschen) Optimierung unter Verwendung der Randbedingungen ermittelt werden.

Die Randbedingungen verringern die Anzahl an bei der (z.B. Bayesschen) Optimierung erforderlichen Iterationen, so dass der Rechenaufwand verringert wird. Werden die Randbedingungen mittels des Sprachmodells ermittelt, führt dies zu einem verringerten Aufwand (z.B. Zeitaufwand und/oder Kostenaufwand) im Vergleich zu einem Vordefinieren der Randbedingungen durch einen Experten.

In Beispiel 3 kann das Verfahren gemäß Beispiel 1 oder 2 optional ferner aufweisen: Auswählen einer Regelmethode, welche die Berücksichtigung von Sicherheitsbedingungen (z.B. Beschränkungen des Regelsystems, eine Stabilität des Regelsystems, etc.) bei der Reglersynthese erlaubt, als die vordefinierte Regelmethode; und wobei beim Ermitteln des Reglermodells das Regelsystem mittels Reglersynthese unter Berücksichtigung der Sicherheitsbedingungen modelliert wird.

Anschaulich wird dadurch bereits bei der Regelsynthese die Sicherheit und die Stabilität des Regelsystems berücksichtigt. Dies ist für sicherheitskritische Anwendungen von besonderer Bedeutung. Ein Beispiel für eine solche Regelmethode, welche die Berücksichtigung von Sicherheitsbedingungenerlaubt, ist die Modellprädiktive Regelung (MPC).

In Beispiel 4 kann das Verfahren gemäß einem der Beispiele 1 bis 3 optional ferner aufweisen: Ermitteln einer angepassten Kostenfunktion des Regelsystems mittels des Sprachmodells, indem eine angepasste Textbeschreibung in das Sprachmodell eingegeben wird, wobei die angepasste Textbeschreibung die Regelaufgabe des Regelsystems beschreibt und die Kostenfunktion, eine Benutzer-Rückmeldung (auch als Benutzer-Feedback bezeichnet) bezüglich eines Verhaltens des Reglers und eine Anweisung zum Ermitteln der angepassten Kostenfunktion aufweist; Ermitteln von mehreren angepassten optimierten Regelparameterwerten und eines angepassten Reglermodells unter Verwendung der angepassten Kostenfunktion; und (Re-) Konfigurieren des Reglers gemäß dem angepassten Reglermodell und den mehreren angepassten optimierten Regelparameterwerten.

Die Leistung eines Reglers in einem geschlossenen Regelkreis kann benutzerspezifisch sein. Folglich kann jeder Benutzer, der ein Regelsystem mit dem Regler bedient, eigene Leistungspräferenzen haben. Diese Leistungspräferenzen sind allerdings nicht direkt mit der Kostenfunktion verknüpft. Das Rekonfigurieren des Reglers anhand der Benutzer-Rückmeldung bezüglich der vorhergehenden Kostenfunktion ermöglicht das Anpassen der Kostenfunktion und der Regelparameter, um die von dem Benutzer empfundene Leistung zu verbessern. Auch erfordert dieser Ansatz keine Kenntnisse der Regelungstechnik. Anschaulich wird dadurch eine Rekonfiguration des Reglers im Betrieb ermöglicht.

Beispiel 5 ist eingerichtet gemäß einem der Beispiele 1 bis 4, wobei jede Iteration der (z.B. Bayesschen) Optimierung (z.B., wenn die Regelmethode keine Berücksichtigung von Sicherheitsbedingungen bei der Reglersynthese erlaubt) ferner aufweist: Ermitteln anhand der Simulation, ob das Reglermodell ein oder mehrere vordefinierte Bedingungen (z.B. Stabilität, Sicherheit, Leistungskriterien, etc.) erfüllt; und wenn ermittelt wird, dass das Reglermodell die ein oder mehreren vordefinierten Bedingungen nicht erfüllt, Erhöhen des Kostenfunktionswerts oder Übermitteln einer Rückmeldung, welche angibt, dass die ein oder mehreren vordefinierten Bedingungen nicht erfüllt sind (z.B. mittels einer (z.B. dedizierten) Nicht-Realisierbar-Rückmeldung) (an die Optimierung).

Auf diese Weise kann dem (z.B. Bayesschen) Optimierer angezeigt werden, dass die ermittelten Regelparameterwerte vordefinierte Bedingungen, wie beispielsweise einer Stabilität des geschlossenen Regelkreises, einer Sicherheit des Regelsystems, ein oder mehrere Leistungskriterien des Regelsystems, etc. nicht erfüllen, so dass dieser die Parameterwerte derart ermittelt, dass diese ein oder mehreren Bedingungen erfüllt sind.

Beim klassischen Reglerdesign ist Expertenwissen erforderlich, um das Regelsystem nicht aufgrund von unpassenden Regelparametern zu destabilisieren. Anschaulich kann gemäß Beispiel 3 oder 5 automatisch (ohne Expertenwissen) sichergestellt werden, dass das Regelsystem sicher und stabil ist.

Beispiel 6 ist eingerichtet gemäß einem der Beispiele 1 bis 5, wobei die Textbeschreibung zur Beschreibung der Regelaufgabe ein oder mehrere Beschreibungen der folgenden Beschreibungen aufweist: eine Beschreibung eines gewünschten Verhaltens des Regelsystems, eine Modellbeschreibung der Regelaufgabe, eine Zustandsraumdarstellung des Regelsystems, und/oder eine Übertragungsfunktion des Regelsystems.

Beispiel 7 ist ein Regler, der mittels des Verfahrens gemäß einem der Beispiele 1 bis 6 konfiguriert wurde.

Beispiel 8 ist eine Datenverarbeitungseinheit, die eingerichtet ist, das Verfahren gemäß einem der Beispiele 1 bis 6 auszuführen.

Beispiel 9 ist ein Computerprogramm mit Befehlen, die, wenn sie durch einen Prozessor ausgeführt werden, bewirken, dass der Prozessor das Verfahren gemäß einem der Beispiele 1 bis 6 durchführt.

Beispiel 10 ist ein computerlesbares Medium, das Befehle speichert, die, wenn sie durch einen Prozessor ausgeführt werden, bewirken, dass der Prozessor das Verfahren gemäß einem der Beispiele 1 bis 6 durchführt.

In den Zeichnungen beziehen sich ähnliche Bezugszeichen im Allgemeinen auf dieselben Teile in den ganzen verschiedenen Ansichten. Die Zeichnungen sind nicht notwendigerweise maßstäblich, wobei die Betonung stattdessen im Allgemeinen auf die Darstellung der Prinzipien der Erfindung gelegt wird. In der folgenden Beschreibung werden verschiedene Aspekte mit Bezug auf die folgenden Zeichnungen beschrieben.
Figur 1 zeigt ein Regelsystem mit einem geschlossenen Regelkreis;
Figur 2 zeigt eine Regelung beim zumindest teilweise automatisierten Fahren gemäß verschiedenen Aspekten;
Figur 3 zeigt ein Ablaufdiagramm eines Verfahrens zum Konfigurieren eines Reglers in einem Regelsystem mit einem geschlossenen Regelkreis gemäß verschiedenen Aspekten;
Figuren 4A und 4B zeigen jeweils ein schematisches Ablaufdiagramm des Verfahrens zum Konfigurieren des Reglers gemäß verschiedenen Aspekten; und
Figur 5 zeigt zeitliche Verläufe eines beispielhaften Konfigurieren von Regelparametern des Reglers.

Die folgende ausführliche Beschreibung bezieht sich auf die begleitenden Zeichnungen, die zur Erläuterung spezielle Details und Aspekte dieser Offenbarung zeigen, in denen die Erfindung ausgeführt werden kann. Andere Aspekte können verwendet werden und strukturelle, logische und elektrische Änderungen können durchgeführt werden, ohne vom Schutzbereich der Erfindung abzuweichen. Die verschiedenen Aspekte dieser Offenbarung schließen sich nicht notwendigerweise gegenseitig aus, da einige Aspekte dieser Offenbarung mit einem oder mehreren anderen Aspekten dieser Offenbarung kombiniert werden können, um neue Aspekte zu bilden.

Im Folgenden werden verschiedene Beispiele genauer beschrieben.

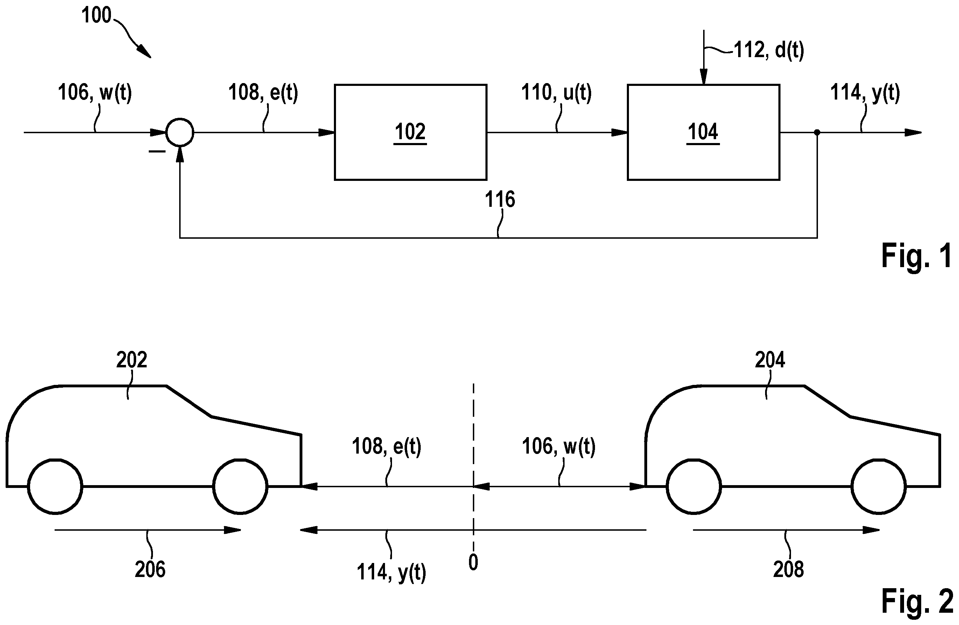

**FIG.1** zeigt ein Regelsystem 100 mit einem geschlossenen Regelkreis. Der geschlossene Regelkreis kann einen Regler 102 und eine Regelstrecke 104 aufweisen. Die Regelstrecke 104 kann beispielsweise ein Stellglied aufweisen, dessen Betrieb mittels einer von dem Regler 102 ermittelten Stellgröße, u(t), 110 geregelt wird.

Der Regelkreis soll eine Führungsgröße, w, (auch als Soll-Wert bezeichnet) 106 (beispielsweise eine physikalische Größe) auch als Regelgröße, y, (auch als Ist-Wert bezeichnet) 114 ausgeben. Allerdings kann der Ist-Wert (also die Regelgröße, y, 114) von dem Soll-Wert (also der Führungsgröße 106) aufgrund von auf die Regelstrecke 104 wirkenden Störgrößen, d, 112 abweichen. Um eine Angleichung des Ist-Wertes, y, 114 an den Soll-Wert, w, zu erreichen, wird (in 116) ein derzeitiger Ist-Wert der Regelgröße, y(t), 114 (also der Ist-Wert zum Zeitpunkt t) rückgeführt und der Regler 102 ermittelt anhand einer Regelabweichung (als Abweichung des Ist-Wertes der Regelgröße, y, 114 von dem Soll-Wert der Führungsgröße 106 (d.h. *e(t) = w(t) - y(t))),* e(t), 108 die Stellgröße, u(t), 110 (gemäß welcher das Stellglied der Regelstrecke 104 gesteuert wird). Auf diese Weise wird der Ist-Wert der Regelgröße, y(t), 114 mit der Zeit, t, an den Soll-Wert der Führungsgröße 106 angeglichen.

**FIG.2** zeigt eine beispielhafte Regelung beim zumindest teilweise automatisierten Fahren gemäß verschiedenen Aspekten.

Ein zumindest teilweise automatisiertes Fahrzeug 202 kann allgemein Fahraufgaben autonom übernehmen. Das zumindest teilweise automatisierte Fahrzeug 202 kann ein automatisiertes Fahrzeug oder ein autonomes Fahrzeug sein. Ein Autonomie-Level eines Fahrzeugs kann durch ein SAE (Society of Automotive Engineers) Level (z.B. wie in SAE J3016 definiert) ermittelt oder angegeben werden. Zum Beispiel kann das zumindest teilweise automatisierte Fahrzeug 100 ein teilautomatisiertes Fahrzeug (gemäß SAE-Level 2), ein hochautomatisiertes Fahrzeug (gemäß SAE-Level 3), ein vollautomatisiertes Fahrzeug (gemäß SAE-Level 4) oder ein autonomes Fahrzeug (gemäß SAE-Level 5) sein.

In einem Beispiel kann das zumindest teilweise automatisiertes Fahrzeug 202 ein erstes Fahrzeug 202 sein, welches mit einer ersten Geschwindigkeit 206 hinter einem zweiten Fahrzeug 204 fährt. Das zweite Fahrzeug 204 kann eine zweite Geschwindigkeit 208 haben. Das erste Fahrzeug 202 kann zum Beispiel einen Abstandsregeltempomat haben gemäß welchem die erste Geschwindigkeit 206 des ersten Fahrzeugs 202 derart regelt wird, dass ein Abstand zwischen dem ersten Fahrzeug 202 und dem zweiten Fahrzeug 204 einem Sicherheitsabstand entspricht. Anschaulich kann in diesem Beispiel der Sicherheitsabstand die Führungsgröße, w(t) 106 sein und ein tatsächlicher Abstand zwischen dem ersten Fahrzeug 202 und dem zweiten Fahrzeug 204 kann die Regelgröße, y(t), 114 sein. In diesem Beispiel wird die Beschleunigung des ersten Fahrzeugs 202 geregelt, um die Regelabweichung e(t), 108 zu verringern.

Es wird verstanden, dass dies ein beispielhaftes Regelsystem ist und dass der hierin beschriebene (zu konfigurierende) Regler ein Regler in jedem technischen Regelsystem sein kann.

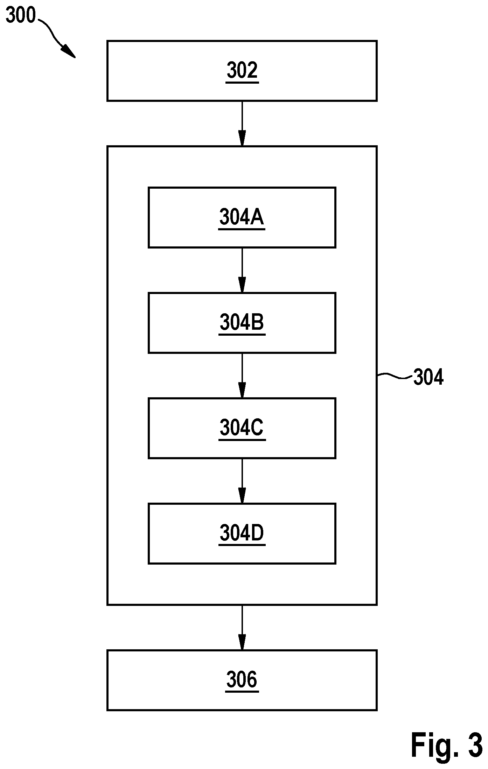

**FIG.3** zeigt ein Ablaufdiagramm eines (z.B. computerimplementierten) Verfahrens 300 zum Konfigurieren eines Reglers in einem Regelsystem mit einem geschlossenen Regelkreis gemäß verschiedenen Aspekten.

Das Verfahren 300 kann (in 302) ein Ermitteln einer Kostenfunktion des Regelsystems mittels eines (großen) Sprachmodells aufweisen, indem eine Textbeschreibung, welche eine Regelaufgabe des Regelsystems beschreibt (z.B. eine Beschreibung des gewünschten Verhaltens und eine Modellbeschreibung des Regelproblems) und eine Anweisung zum Ermitteln der Kostenfunktion aufweist, in das Sprachmodell eingegeben wird.

Das Verfahren 300 kann (in 304) ein Ermitteln mehrerer optimierter Regelparameterwerte aufweisen, indem mittels (z.B. Bayesscher) Optimierung für jeden Regelparameter mehrerer Regelparameter des Reglers ein jeweiliger optimierter Regelparameterwert ermittelt wird.

Hierbei kann jede Iteration der (z.B. Bayesschen) Optimierung aufweisen:
- Ermitteln (in 304A) mehrerer Regelparameterwerte, indem für jeden Regelparameter der mehreren Regelparameter ein jeweiliger Regelparameterwert ermittelt wird, um die Kostenfunktion zu verringern (z.B. zu minimieren),
- Ermitteln (in 304B) eines Reglermodells, indem das Regelsystem unter Verwendung der (ermittelten) mehreren Regelparameterwerte mittels Reglersynthese für eine vordefinierte Regelmethode modelliert wird,
- Simulieren (in 304C) eines zeitlichen Verhaltens (z.B. einer Trajektorie) des Regelsystems anhand des Reglermodells, und
- unter Verwendung des (simulierten) zeitlichen Verlaufs des Regelsystems, Ermitteln (in 304D) eines Kostenfunktionswerts gemäß der Kostenfunktion

Das Verfahren 300 kann (in 306) ein Konfigurieren des Reglers gemäß dem (in der letzten Iteration der (z.B. Bayesschen) Optimierung ermittelten) Reglermodell und den mehreren optimierten Regelparameterwerten aufweisen.

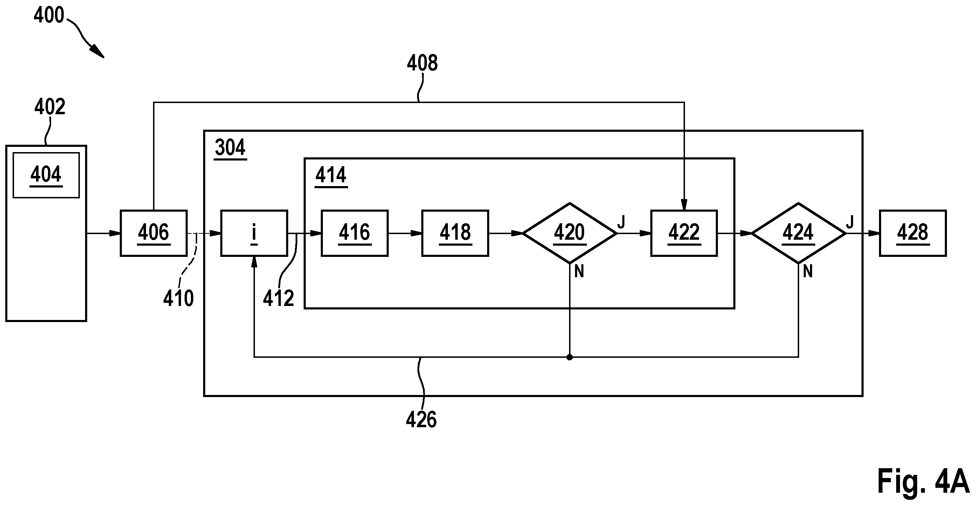

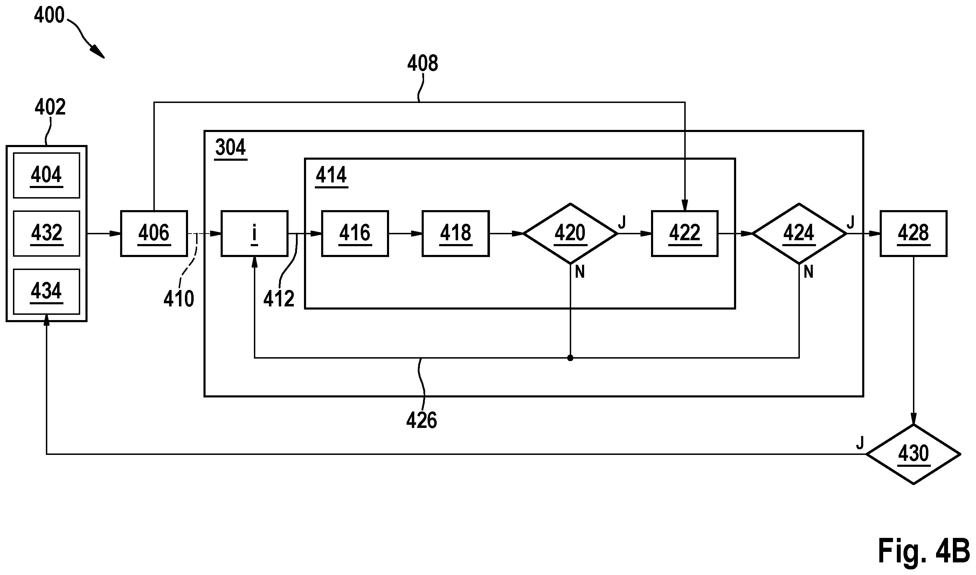

Im Folgenden werden verschiedene Aspekte des Verfahren 300 mit Bezug auf **FIG.4A** und **FIG.4B** detaillierter beschrieben, welche jeweils ein schematisches Ablaufdiagramm 400 des Verfahrens 300 zeigen.

Zuerst kann die Textbeschreibung, 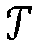 , 402 erzeugt werden. Die Textbeschreibung, 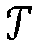 , 402 kann ein Prompt zum Prompten des (großen) Sprachmodells 406 sein. Die Textbeschreibung, T, 402 kann eine allgemeine Beschreibung, D, 404 aufweisen, welche die Regelaufgabe des Regelsystems 100 beschreibt und die Anweisung zum Ermitteln der Kostenfunktion 408 aufweist. Die Beschreibung der Regelaufgabe kann beispielsweise eine Beschreibung des Regelsystems 100 (z.B. eine Modellbeschreibung der Regelaufgabe, eine Zustandsraumdarstellung des Regelsystems 100, und/oder eine Übertragungsfunktion des Regelsystems 100) aufweisen. Ferner kann die Beschreibung der Regelaufgabe eine Beschreibung eines gewünschten Verhaltens des Regelsystems 100 aufweisen. Diese Beschreibung des gewünschten Verhaltens des Regelsystems 100 kann beispielsweise die wirtschaftlichen Ziele des Regelsystems 100 berücksichtigen (z.B. eine Verringerung des Kraftstoffverbrauchs).

In 302 kann dann die Textbeschreibung, 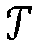 , 402 in das Sprachmodell 406 eingegeben werden, um die Kostenfunktion 408 zu erzeugen. Das Sprachmodell 406 kann jede Art von LLM sein. Das Sprachmodell 406 kann beispielsweise eine Transformer-Architektur aufweisen.

In 304 erfolgt dann die Optimierung der Regelparameter mittels (z.B. Bayesscher) Optimierung. Gemäß verschiedenen Aspekten kann die Regelmethode vordefiniert sein, so dass sich die Regelparameter als Parameter der vordefinierten Regelmethode ergeben.

Die Regelmethode kann jede Art von Regelmethode sein, wie beispielsweise:
- ein Proportional-Regel (P-Regler), welcher mittels des Regelparameters *K_{P}* die Stellgröße, u(t), 110 proportional zur Regelabweichung, e(t), 108 regelt;
- ein Integral-Regel (I-Regler), welcher die Regelabweichung, e(t), 108 über die Zeit, t, integriert und die Stellgröße, u(t), 110 steigt mit Dauer der Regelabweichung, e(t), 108 gewichtet mittels des Regelparameters *K_{I}*;
- ein Differential-Regel (D-Regler), welcher auf eine Änderungsgeschwindigkeit der Regelabweichung, e(t), 108 reagiert gewichtet mittels des Regelparameters *K_{D}*;
- jede Kombination von P-Regler, I-Regler, und D-Regler (z.B. ein Proportional-Integral-Regel (Pl-Regler), ein Proportional-Differential-Regel (PD-Regler), ein Proportional-Integral-Differential-Regel (PID-Regler));
- eine Modellprädiktive Regelung (MPC);
- eine Zustands-Regelmethode (z.B. ein Linear-Quadratischer Regler (LQR) mit Gewichtungsmatrizen als Regelparameter);
- eine nichtlineare Regelmethode (z.B. eine nichtlineare MPC);
- etc.

Die Optimierung der Regelparameter in 304 kann auch als Reglerauslegung bezeichnet werden. In jeder Iteration, i, der (z.B. Bayesschen) Optimierung können (in 304A) mehrere Regelparameterwerte, *p*, 412 ermittelt werden, indem für jeden Regelparameter der mehreren Regelparameter ein jeweiliger Regelparameterwert ermittelt wird, um die Kostenfunktion, *f*, 408 zu verringern.

Optional kann die Optimierung der Regelparameter unter Verwendung von Randbedingungen, welche für ein oder mehrere der mehreren Regelparameter einen Bereich zulässiger Regelparameterwerte angeben, erfolgen. Dadurch kann die Anzahl an erforderlichen Iterationen der (z.B. Bayesschen) Optimierung, und damit der Aufwand, verringert werden. In manchen Aspekten kann die Textbeschreibung 402 ferner eine Anweisung zum Ermitteln der Randbedingungen aufweisen, so dass das Sprachmodell 406 in Reaktion auf die Eingabe der Textbeschreibung (des Prompts) 402 ferner die Randbedingungen, P, 410 ausgibt. Alternativ können die Randbedingungen, P, 410 vordefiniert sein. Das Ermitteln der Randbedingungen, P, 410 mittels des Sprachmodells 406 ermöglicht ein dynamisches Anpassen der Randbedingungen während des hierin beschriebenen Rekonfigurierens des Reglers 102 anhand der Benutzer-Rückmeldung(en).

Anhand der mehreren Regelparameterwerte, *p*, 412 kann dann ein Ausrollen 414 des Reglers 102 erfolgen. Hierbei kann eine Reglersynthese 416 erfolgen. Bei der Reglersynthese 416 kann eine mathematische Modellierung des Reglers 102 für die vordefinierte Regelmethode anhand der mehreren Regelparameterwerte, *p*, 412 erfolgen. Anschaulich können mathematische Modelle genutzt werden, um die mehreren Regelparameterwerte, p, 412 so abzustimmen, dass das gewünschte Verhalten erreicht wird. Ziel der Reglersynthese 416 ist es, durch geeignete Regelungsstrategien ein Verhalten des Regelsystems 100 zu erreichen, welches bestimmte Vorgaben erfüllt. Als Ergebnis der Reglersynthese 416 kann in 304B das Reglermodell ermittelt werden.

In 304C kann dann eine Simulation 418 des zeitlichen Verhaltens (z.B. einer Trajektorie) des Regelsystems 100 anhand des Reglermodell erfolgen.

In manchen Aspekten kann die vordefinierte Regelmethode eine Regelmethode (z.B. MPC) sein, welche die Berücksichtigung von Sicherheitsbedingungen (z.B. Beschränkungen des Regelsystems, eine Stabilität des Regelsystems, etc.) bei der Reglersynthese erlaubt, und die Reglersynthese 416 kann unter Berücksichtigung von Sicherheitsbedingungen (z.B. zur Gewährleistung der Stabilität) erfolgen.

Falls die vordefinierte Regelmethode keine Berücksichtigung von Sicherheitsbedingungen erlaubt (z.B. bei einer PID-Regelung) oder bei der Reglersynthese 416 keine Sicherheitsbedingungen berücksichtig werden, kann das Ausrollen 414 ferner eine Überprüfung 420 der Sicherheitsbedingungen (optional einschließlich Leistungsbedingungen) aufweisen. Wird ermittelt, dass das Reglermodell die Sicherheitsbedingungen nicht erfüllt ("N" in 420), kann der Kostenfunktionswert 426 (z.B. auf einen vordefinierten Maximalwert oder um einen vordefinierten Strafwert) erhöht werden. Alternativ dazu kann eine entsprechende Rückmeldung (also eine Rückmeldung, welche angibt, dass die Sicherheitsbedingungen nicht erfüllt sind) an den Optimierer übermittelt werden. Diese Rückmeldung kann beispielsweise eine Nicht-Realisierbar-Rückmeldung (engl.: infeasable feedback) (also eine Rückmeldung, die angibt, dass die derzeitigen Regelparameter nicht realisierbar sind) sein.

Sind die Sicherheitsbedingungen erfüllt (z.B. aufgrund der Verwendung eines die Sicherheitsbedingungen berücksichtigenden Reglermodells bei der Regelsynthese 416 oder aufgrund der erfolgreichen Überprüfung ("J" in 420)), kann dann anhand der Simulation 418 (also den Trajektorien) des Regelsystems 100 die Kostenfunktion, f, 408 (in 422 bzw. in 304D) ausgewertet werden, um den Kostenfunktionswert 426 zu ermitteln. Anschaulich erfolgt in 422 eine Evaluation der Kostenfunktion, f, 408.

Ist die Stoppbedingung 424 der (z.B. Bayesschen) Optimierung nicht erfüllt ("N" in 424), wird dieser Prozess wiederholt. Ist die Stoppbedingung 424 erfüllt ("J" in 424) (also ist die (z.B. Bayessche) Optimierung konvergiert), wird der Regler 102 (in 428) gemäß dem in der letzten Iteration bei der Reglersynthese 426 ermittelten Reglermodell und gemäß den mehreren optimierten Regelparameterwerten konfiguriert.

Anschließend kann die Verwendung des Reglers 102 durch einen Benutzer erfolgen. Mit Bezug auf FIG.4B kann das Regelsystem 100 in Anwendung derart eingerichtet sein, dass der Benutzer eine Rückmeldung (also eine Benutzer-Rückmeldung, welche auch als Benutzer-Feedback bezeichnet werden kann) 430 bezüglich eines Verhaltens des Reglers 102 geben kann ("J" in 430). Hierbei kann die Benutzer-Rückmeldung Änderungen am Regelverhalten des Reglers 102 aufweisen.

In diesem Fall kann die Textbeschreibung, T, 402 erneut erzeugen werden, aber kann zusätzlich zu der allgemeinen Beschreibung, 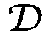 , 404 die Benutzer-Rückmeldung 430 und die zuvor ermittelte Kostenfunktion 408 aufweisen. Diese Textbeschreibung, 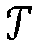 , 402 kann dann in das Sprachmodell 406 eingegeben werden und das Verfahren 300 erneut durchgeführt werden. Gibt der Benutzer nun erneut Rückmeldung 430, können beide Benutzer-Rückmeldungen und die jeweils zugehörigen Kostenfunktionen Teil der nächsten Textbeschreibung, 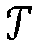 , 402 sein.

Über die Zeit, können so ein oder mehrere Benutzer-Rückmeldungen, $τ = {\left\{{τ}_{n}\right\}}_{n = 1}^{N}$, 432 (mit einer Anzahl N größer als oder gleich eins) und zugehörige ein oder mehrere Kostenfunktionen, $F = {\left\{{f}_{n}\right\}}_{n = 1}^{N}$, 434, von denen jede Kostenfunktion einer jeweiligen Benutzer-Rückmeldung zugeordnet ist, erhalten werden und in der nächsten Iteration des Verfahrens 300 als Teil der Textbeschreibung, 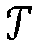 , 402 in das Sprachmodell 402 eingegeben werden. Anschaulich kann das Verfahren 300 iterativ durchgeführt, wobei jede Iteration nach der ersten Iteration durch eine Benutzer-Rückmeldung ausgelöst wird. Anschaulich wird ein Verfahren zum Erreichen eines gewünschten Regelverhaltens bereitgestellt, welches ohne Expertenwissen im Betrieb dynamisch angepasst werden kann.

In dem in FIG.2 beschriebenen Beispiel regelt der Regler 102 die Beschleunigung des ersten Fahrzeugs 202, damit der Abstand zwischen dem ersten Fahrzeug 202 und dem zweiten Fahrzeug 204 dem Sicherheitsabstand entspricht. In diesem Beispiel kann die Benutzer-Rückmeldung beschreiben, ob die Beschleunigung zu groß (z.B. zu aggressiv) oder zu niedrig ist.

In einem anderen Beispiel kann das Regelsystem 100 ein aktives Dämpfungssystem des Fahrzeugs sein und der Regler 102 kann die Steifigkeit der Dämpfer regeln. In diesem Beispiel kann die Benutzer-Rückmeldung beschreiben, ob die Dämpfung zu stark oder zu schwach ist.

In einem Beispiel kann das ein erstes Fahrzeug 202 sein, welches mit einer ersten Geschwindigkeit 206 hinter einem zweiten Fahrzeug 204 fährt. Das zweite Fahrzeug 204 kann eine zweite Geschwindigkeit 208 haben. Das erste Fahrzeug 202 kann zum Beispiel einen Abstandsregeltempomat haben gemäß welchem die erste Geschwindigkeit 206 des ersten Fahrzeugs 202 derart regelt wird, dass ein Abstand zwischen dem ersten Fahrzeug 202 und dem zweiten Fahrzeug 204 einem Sicherheitsabstand entspricht. Anschaulich kann in diesem Beispiel der Sicherheitsabstand die Führungsgröße, w(t) 106 sein und ein tatsächlicher Abstand zwischen dem ersten Fahrzeug 202 und dem zweiten Fahrzeug 204 kann die Regelgröße, y(t), 114 sein. In diesem Beispiel wird die Beschleunigung des ersten Fahrzeugs 202 geregelt, um die Regelabweichung e(t), 108 zu verringern.

Anschaulich kann ein Benutzer Leistungsanforderungen (als Teil des gewünschten Verhaltens) definieren und Rückmeldung zur Leistung des Reglers 102 im Betrieb geben, um so einen Regler 102 gemäß benutzerspezifischen Leistungsanforderungen zu konfigurieren.

Algorithmus 1 beschreibt einen beispielhaften Ablauf des Verfahrens 300 inklusive der Berücksichtigung der ein oder mehreren Benutzer-Rückmeldungen, $τ = {\left\{{τ}_{n}\right\}}_{n = 1}^{N}$, 432 (ab zweiter Iteration des Verfahrens 300).

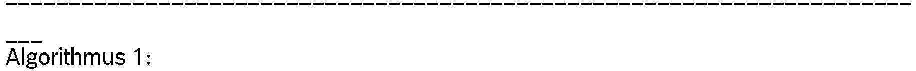

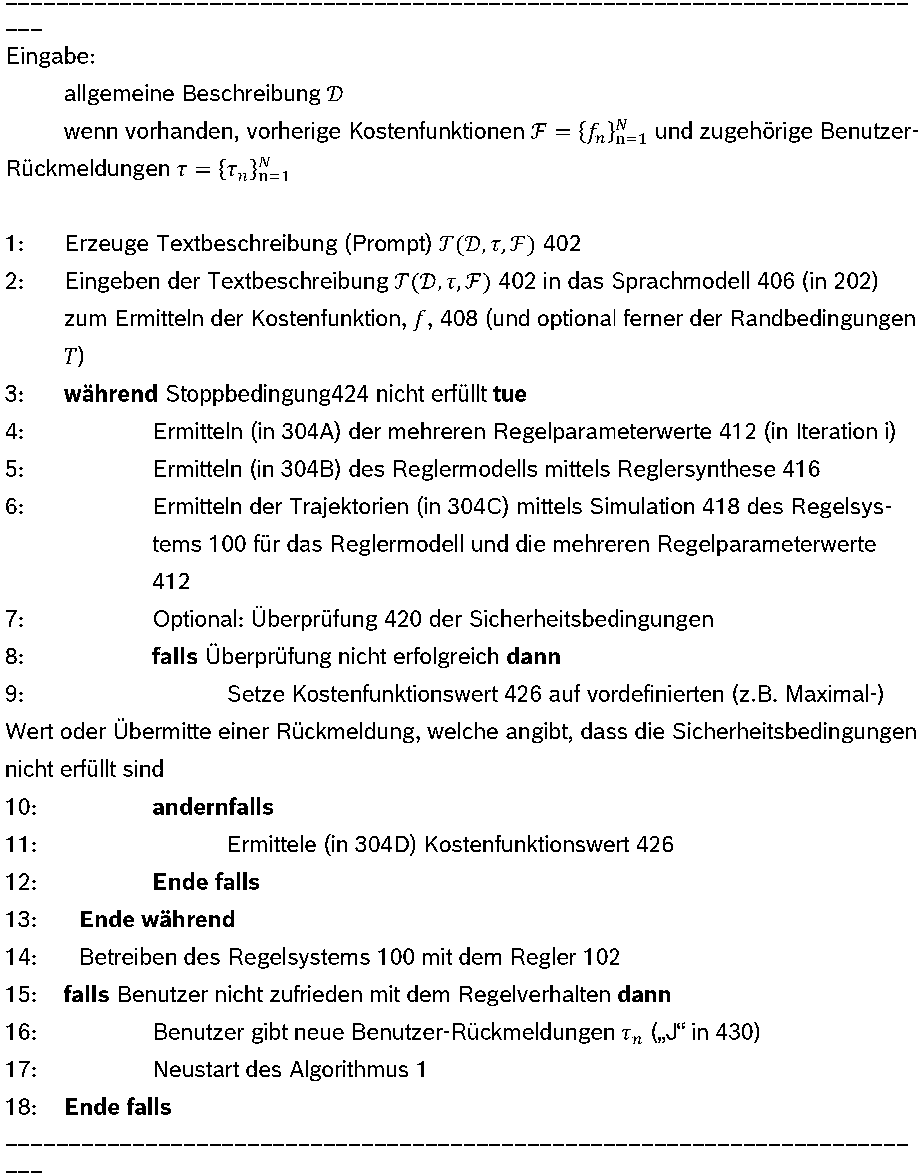

Im Folgenden werden Aspekte eines beispielhaften Falls des Konfigurierens des Reglers 102 beschrieben.

Eine beispielhafte allgemeine Beschreibung 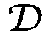 der Textbeschreibung, 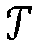 , 402 für den beispielhaften Fall der Bayesschen Optimierung kann lauten:
"Ich möchte die Parameter einer adaptiven Geschwindigkeitsregelung mithilfe der Bayesschen Optimierung (BO) optimieren. Dazu muss ich eine Kostenfunktion innerhalb des BO-Algorithmus entwerfen. Für die Kostenfunktion stehen das Eingangssignal "u" (Beschleunigung) und das Zustandssignal "x" (Position, Geschwindigkeit) des nachfolgenden Fahrzeugs zur Verfügung. Entwirf eine Kostenfunktion, die nur diese beiden Faktoren enthält: 1. Minimierung ruckartiger Bewegung zur Erhöhung des Fahrkomforts 2. Minimierung der Quadratwurzel aus der Summe der quadrierten Positionsfehler in Bezug auf 0. Gewichte beide Faktoren gleich.

Gib eine (z.B. MATLAB-) Funktion mit der folgenden Signatur aus
**Funktion** Kostenfunktionswert = Kostenfunktion(x, u) % Implementiere hier die Kostenfunktion **Ende".**

In Reaktion auf die Eingabe dieser beispielhafte allgemeine Beschreibung 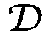 in das Sprachmodell 406, kann dieses folgende Ausgabe ausgeben:
**"Funktion** Kostenfunktionswert = Kostenfunktion(x, u)
% Berechne ruckartige_Bewegungen (Ableitung der Beschleunigung)
ruckartige_Bewegungen = Diff(u);
% Berechne die Summe der quadrierten Positionsfehler in Bezug auf 0
Positionsfehler = x(1,:); % Position ist x(1,:)
quadratischer_Positionsfehler = Positionsfehler.^2;
% Berechne die Kostenkomponenten
ruckartige_Bewegungen_Kosten = Summe(ruckartige_Bewegungen.^2
Positionsfehler_Kosten = Quadrat(Summe(quadratischer_Positionsfehler));
% Gewichte beide Faktoren gleich
Kostenfunktionswert = 0,5 * ruckartige_Bewegungen + 0,5 * Positionsfehler_Kosten;
**Ende"**

In Reaktion auf eine Benutzer-Rückmeldung mit "Bitte erhöhe den Fahrkomfort", kann die angepasste Textbeschreibung, 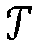 , 402 für den beispielhaften Fall der Bayesschen Optimierung wie folgt lauten:
"Ich möchte die Parameter einer adaptiven Geschwindigkeitsregelung mithilfe der Bayesschen Optimierung (BO) optimieren. Dazu muss ich eine Kostenfunktion innerhalb des BO-Algorithmus entwerfen. Für die Kostenfunktion stehen das Eingangssignal "u" (Beschleunigung) und das Zustandssignal "x" (Position, Geschwindigkeit) des nachfolgenden Fahrzeugs zur Verfügung. Entwirf eine Kostenfunktion, die nur diese beiden Faktoren enthält:
1. Minimierung ruckartiger Bewegung zur Erhöhung des Fahrkomforts 2. Minimierung der Quadratwurzel aus der Summe der quadrierten Positionsfehler in Bezug auf 0.
Betrachte die folgenden bereits implementierten Kostenfunktionen mit jeweiliger Benutzer-Rückmeldung:
   **Funktion** Kostenfunktionswert = Kostenfunktion(x, u)
   % vorherige Kostenfunktionen $F = {\left\{{f}_{n}\right\}}_{n = 1}^{N}$
   **Ende**
   Benutzer-Rückmeldungen: $τ = {\left\{{τ}_{n}\right\}}_{n = 1}^{N}$ "Bitte erhöhe den Fahrkomfort"
   Gib eine (z.B. MATLAB-) Funktion mit der folgenden Signatur aus
   **Funktion** Kostenfunktionswert = Kostenfunktion(x, u) % Implementiere hier die Kostenfunktion **Ende".**

In Reaktion auf die Eingabe der angepassten Textbeschreibung 402 in das Sprachmodell 406, kann dieses folgende Ausgabe ausgeben:
**"Funktion** Kostenfunktionswert = Kostenfunktion(x, u)
% Berechne ruckartige_Bewegungen (Ableitung der Beschleunigung)
ruckartige_Bewegungen = Diff(u);
% Berechne die Summe der quadrierten Positionsfehler in Bezug auf 0
Positionsfehler = x(1,:); % Position ist x(1,:)
quadratischer_Positionsfehler = Positionsfehler.^2;
% Berechne die Kostenkomponenten
ruckartige_Bewegungen_Kosten = Summe(ruckartige_Bewegungen.^2
Positionsfehler_Kosten = Quadrat(Summe(quadratischer_Positionsfehler));
% Gewichte die Faktoren mit ein oder mehreren Gewichtungen, um Fahrkomfort zu erhöhen
ruckartige_Bewegungen_Gewichtungsfaktor = 0,7;
Positionsfehler_Gewichtungsfaktor = 0,3;
% Berechne Kostenfunktionswert
Kostenfunktionswert = ruckartige_Bewegungen_Gewichtungsfaktor * ruckartige_Bewegungen + Positionsfehler_Gewichtungsfaktor * Positionsfehler_ Kosten;
**Ende"**

In einem Beispiel für das in FIG.2 beschriebene Szenario kann die vordefinierte Regelmethode eine MPC mit einem Vorhersagehorizont von 20 Schritten sein. Die ermittelte Kostenfunktion kann eine quadratische Stufenkostenfunktion *l*(*x, u)* sein, die eine Abweichung vom Zustand *x* und der Eingabe *u* zum Ursprung bestraft gemäß *l*(*x, u*) *= x*^{T}*Qx + u*^{T}*Ru,* wobei Q > 0 und R > 0 Gewichtungsmatrizen sind, welche die Regelparameter bereitstellen.

Die Randbedingungen können die Beschleunigung auf einen Bereich -10 ≤ u ≤ 7 beschränken und die Gewichtungsmatrizen wie folgt: .1 < *Q*₁₁ ≤ 100,0.1 < *Q*₂₂ ≤ 100 und 0.1 *< R* ≤ 100.

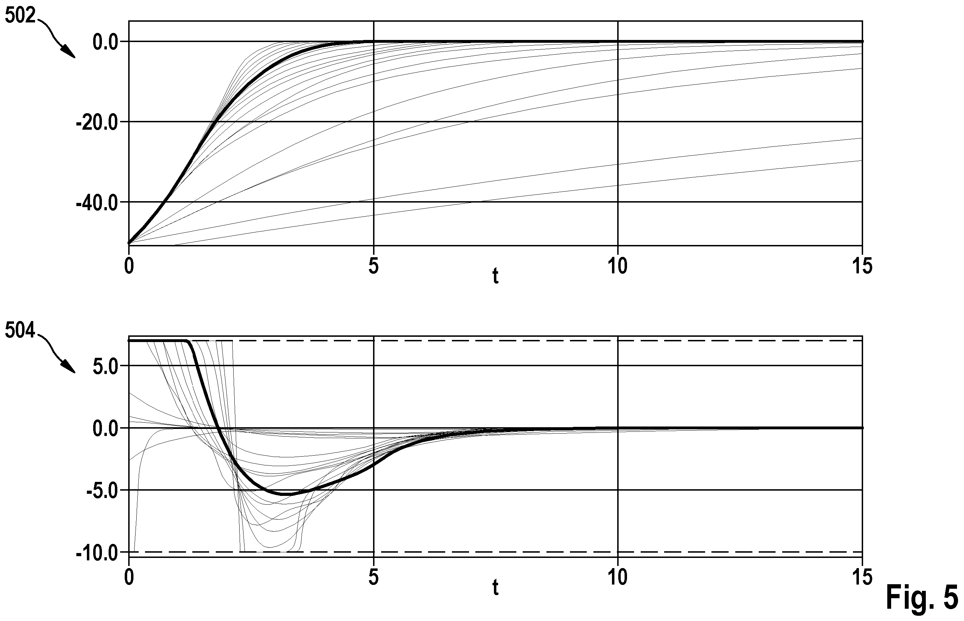

Mittels (z.B. Bayesscher) Optimierung werden dann in 304 die Gewichtungsmatrizen optimiert. In diesem Beispiel, in welchem die zweite Geschwindigkeit 208 30 m/s ist, hat die Bayessche Optimierung nach 60 Iterationen die optimierten Gewichtungsmatrizen (als optimierte Parameterwerte) mit Q = diag(33.494,2.3282) und R = 99.9 ergeben mit einer erwarteten Leistung des geschlossenen Regelkreises von *J** = 44.9058. **FIG.5** zeigt beispielhafte Trajektorien (also beispielhafte zeitliche Verläufe) während der Bayesschen Optimierung (mit der Trajektorie für die optimierten Gewichtungsmatrizen als fette durchgezogene Linie) für den Abstandsfehler 502 als Regelabweichung e(t), 108 und die Beschleunigung 504 als Stellgröße, u(t), 110.

## Patentansprüche

1. Verfahren (300) zum Konfigurieren eines Reglers (102) in einem Regelsystem (100) mit einem geschlossenen Regelkreis, das Verfahren (300) aufweisend:
• Ermitteln (302) einer Kostenfunktion (408) des Regelsystems (100) mittels eines Sprachmodells (406), indem eine Textbeschreibung (402), welche eine Regelaufgabe des Regelsystems (100) beschreibt und eine Anweisung zum Ermitteln der Kostenfunktion (408) aufweist, in das Sprachmodell (406) eingegeben wird;
• Ermitteln (304) mehrerer optimierter Regelparameterwerte, indem mittels Optimierung für jeden Regelparameter mehrerer Regelparameter des Reglers (102) ein jeweiliger optimierter Regelparameterwert ermittelt wird, wobei jede Iteration der Optimierung aufweist:
∘ Ermitteln (304A) mehrerer Regelparameterwerte (412), indem für jeden Regelparameter der mehreren Regelparameter ein jeweiliger Regelparameterwert ermittelt wird, um die Kostenfunktion (408) zu verringern,
∘ Ermitteln (304B) eines Reglermodells, indem das Regelsystem (100) unter Verwendung der mehreren Regelparameterwerte (412) mittels Reglersynthese (416) für eine vordefinierte Regelmethode modelliert wird,
∘ Simulieren (304C) eines zeitlichen Verhaltens des Regelsystems (100) anhand des Reglermodells, und
∘ unter Verwendung des zeitlichen Verlaufs des Regelsystems (100), Ermitteln (304D) eines Kostenfunktionswerts (426) gemäß der Kostenfunktion (408); und
• Konfigurieren (306) des Reglers (102) gemäß dem Reglermodell und den mehreren optimierten Regelparameterwerten.

2. Verfahren (300) gemäß Anspruch 1,
wobei die Textbeschreibung (402) ferner eine Anweisung zum Ermitteln von Randbedingungen, welche für mindestens einen Regelparameter der mehreren Regelparameter einen Bereich zulässiger Regelparameterwerte angeben, aufweist, so dass mittels des Sprachmodells (406) ferner die Randbedingungen ermittelt werden; und
wobei die mehreren Regelparameterwerte bei der Optimierung (304) unter Verwendung der Randbedingungen ermittelt werden.

3. Verfahren (300) gemäß Anspruch 1 oder 2, ferner aufweisend:
Auswählen einer Regelmethode, welche die Berücksichtigung von Sicherheitsbedingungen bei der Reglersynthese (416) erlaubt, als die vordefinierte Regelmethode; und
wobei beim Ermitteln des Reglermodells das Regelsystem mittels Reglersynthese (416) unter Berücksichtigung der Sicherheitsbedingungen modelliert wird.

4. Verfahren (300) gemäß einem der Ansprüche 1 bis 3, ferner aufweisend:
• Ermitteln einer angepassten Kostenfunktion (408) des Regelsystems (100) mittels des Sprachmodells (406), indem eine angepasste Textbeschreibung (402) in das Sprachmodell (406) eingegeben wird, wobei die angepasste Textbeschreibung (402) die Regelaufgabe des Regelsystems (100) beschreibt und die Kostenfunktion (408, 432), eine Benutzer-Rückmeldung (430, 432) bezüglich eines Verhaltens des Reglers (102) und eine Anweisung zum Ermitteln der angepassten Kostenfunktion (408) aufweist;
• Ermitteln von mehreren angepassten optimierten Regelparameterwerten und eines angepassten Reglermodells unter Verwendung der angepassten Kostenfunktion (408); und
• Konfigurieren des Reglers (102) gemäß dem angepassten Reglermodell und den mehreren angepassten optimierten Regelparameterwerten.

5. Verfahren (300) gemäß einem der Ansprüche 1 bis 4,
wobei jede Iteration der Optimierung (304) ferner aufweist:
Ermitteln (420) anhand der Simulation (418), ob das Reglermodell ein oder mehrere vordefinierte Bedingungen erfüllt; und
wenn ermittelt wird, dass das Reglermodell die ein oder mehreren vordefinierten Bedingungen nicht erfüllt, Erhöhen des Kostenfunktionswerts (426) oder Übermitteln einer Rückmeldung, welche angibt, dass die ein oder mehreren vordefinierten Bedingungen nicht erfüllt sind, an die Optimierung.

6. Verfahren (300) gemäß einem der Ansprüche 1 bis 5,
wobei die Textbeschreibung (402) zur Beschreibung der Regelaufgabe ein oder mehrere Beschreibungen der folgenden Beschreibungen aufweist: eine Beschreibung eines gewünschten Verhaltens des Regelsystems (100), eine Modellbeschreibung der Regelaufgabe, eine Zustandsraumdarstellung des Regelsystems (100), und/oder eine Übertragungsfunktion des Regelsystems (100).

7. Regler (102), der mittels des Verfahrens (300) gemäß einem der Ansprüche 1 bis 6 konfiguriert wurde.

8. Datenverarbeitungseinheit, die eingerichtet ist, das Verfahren (300) gemäß einem der Ansprüche 1 bis 6 auszuführen.

9. Computerprogramm mit Befehlen, die, wenn sie durch einen Prozessor ausgeführt werden, bewirken, dass der Prozessor das Verfahren (300) gemäß einem der Ansprüche 1 bis 6 durchführt.

10. Computerlesbares Medium, das Befehle speichert, die, wenn sie durch einen Prozessor ausgeführt werden, bewirken, dass der Prozessor das Verfahren (300) gemäß einem der Ansprüche 1 bis 6 durchführt.

## Geänderte Patentansprüche

### Geänderte Patentansprüche gemäss Regel 137(2) EPÜ.

1. Verfahren (300) zum Konfigurieren eines Reglers (102) in einem Regelsystem (100) mit einem geschlossenen Regelkreis, das Verfahren (300) aufweisend:
• Ermitteln (302) einer Kostenfunktion (408) des Regelsystems (100) mittels eines Sprachmodells (406), indem eine Textbeschreibung (402), welche eine Regelaufgabe des Regelsystems (100) beschreibt und eine Anweisung zum Ermitteln der Kostenfunktion (408) aufweist, in das Sprachmodell (406) eingegeben wird;
• Ermitteln (304) mehrerer optimierter Regelparameterwerte, indem mittels Optimierung für jeden Regelparameter mehrerer Regelparameter des Reglers (102) ein jeweiliger optimierter Regelparameterwert ermittelt wird, wobei jede Iteration der Optimierung aufweist:
∘ Ermitteln (304A) mehrerer Regelparameterwerte (412), indem für jeden Regelparameter der mehreren Regelparameter ein jeweiliger Regelparameterwert ermittelt wird, um die Kostenfunktion (408) zu verringern,
∘ Ermitteln (304B) eines Reglermodells, indem das Regelsystem (100) unter Verwendung der mehreren Regelparameterwerte (412) mittels Reglersynthese (416) für eine vordefinierte Regelmethode modelliert wird,
∘ Simulieren (304C) eines zeitlichen Verhaltens des Regelsystems (100) anhand des Reglermodells, und
∘ unter Verwendung des zeitlichen Verlaufs des Regelsystems (100), Ermitteln (304D) eines Kostenfunktionswerts (426) gemäß der Kostenfunktion (408); und
• Konfigurieren (306) des Reglers (102) gemäß dem Reglermodell und den mehreren optimierten Regelparameterwerten.

2. Verfahren (300) gemäß Anspruch 1,
wobei die Textbeschreibung (402) ferner eine Anweisung zum Ermitteln von Randbedingungen, welche für mindestens einen Regelparameter der mehreren Regelparameter einen Bereich zulässiger Regelparameterwerte angeben, aufweist, so dass mittels des Sprachmodells (406) ferner die Randbedingungen ermittelt werden; und wobei die mehreren Regelparameterwerte bei der Optimierung (304) unter Verwendung der Randbedingungen ermittelt werden.

3. Verfahren (300) gemäß Anspruch 1 oder 2, ferner aufweisend:
Auswählen einer Regelmethode, welche die Berücksichtigung von Sicherheitsbedingungen bei der Reglersynthese (416) erlaubt, als die vordefinierte Regelmethode; und
wobei beim Ermitteln des Reglermodells das Regelsystem mittels Reglersynthese (416) unter Berücksichtigung der Sicherheitsbedingungen modelliert wird.

4. Verfahren (300) gemäß einem der Ansprüche 1 bis 3, ferner aufweisend:
• Ermitteln einer angepassten Kostenfunktion (408) des Regelsystems (100) mittels des Sprachmodells (406), indem eine angepasste Textbeschreibung (402) in das Sprachmodell (406) eingegeben wird, wobei die angepasste Textbeschreibung (402) die Regelaufgabe des Regelsystems (100) beschreibt und die Kostenfunktion (408, 432), eine Benutzer-Rückmeldung (430, 432) bezüglich eines Verhaltens des Reglers (102) und eine Anweisung zum Ermitteln der angepassten Kostenfunktion (408) aufweist;
• Ermitteln von mehreren angepassten optimierten Regelparameterwerten und eines angepassten Reglermodells unter Verwendung der angepassten Kostenfunktion (408); und
• Konfigurieren des Reglers (102) gemäß dem angepassten Reglermodell und den mehreren angepassten optimierten Regelparameterwerten.

5. Verfahren (300) gemäß einem der Ansprüche 1 bis 4,
wobei jede Iteration der Optimierung (304) ferner aufweist:
Ermitteln (420) anhand der Simulation (418), ob das Reglermodell ein oder mehrere vordefinierte Bedingungen erfüllt; und
wenn ermittelt wird, dass das Reglermodell die ein oder mehreren vordefinierten Bedingungen nicht erfüllt, Erhöhen des Kostenfunktionswerts (426) oder Übermitteln einer Rückmeldung, welche angibt, dass die ein oder mehreren vordefinierten Bedingungen nicht erfüllt sind, an die Optimierung.

6. Verfahren (300) gemäß einem der Ansprüche 1 bis 5,
wobei die Textbeschreibung (402) zur Beschreibung der Regelaufgabe ein oder mehrere Beschreibungen der folgenden Beschreibungen aufweist: eine Beschreibung eines gewünschten Verhaltens des Regelsystems (100), eine Modellbeschreibung der Regelaufgabe, eine Zustandsraumdarstellung des Regelsystems (100), und/oder eine Übertragungsfunktion des Regelsystems (100).

7. Datenverarbeitungseinheit, die eingerichtet ist, das Verfahren (300) gemäß einem der Ansprüche 1 bis 6 auszuführen.

8. Computerprogramm mit Befehlen, die, wenn sie durch einen Prozessor ausgeführt werden, bewirken, dass der Prozessor das Verfahren (300) gemäß einem der Ansprüche 1 bis 6 durchführt.

9. Computerlesbares Medium, das Befehle speichert, die, wenn sie durch einen Prozessor ausgeführt werden, bewirken, dass der Prozessor das Verfahren (300) gemäß einem der Ansprüche 1 bis 6 durchführt.
